Europäisches Patentamt

European Patent Office

Office européen des brevets

(11) Veröffentlichungsnummer: **0 429 398 A2**

## (12) EUROPÄISCHE PATENTANMELDUNG

(21) Anmeldenummer: 90810885.5

(22) Anmeldetag: 19.11.90

(51) Int. Cl.⁵: **G02B 6/38**, G01M 11/00

(30) Priorität: 24.11.89 CH 4218/89

(43) Veröffentlichungstag der Anmeldung:
**29.05.91 Patentblatt 91/22**

(84) Benannte Vertragsstaaten:
**AT BE CH DE DK ES FR GB GR IT LI LU NL SE**

(71) Anmelder: **DIAMOND S.A.**
**Via dei Patrizi 5**
**CH-6616 Losone-Locarno(CH)**

(72) Erfinder: **Kalas, Vladimir**
**Via Case Albertini 2**
**CH-6616 Losone(CH)**

(74) Vertreter: **Wenger, René et al**
**Hepp, Wenger & Partner AG Marktgasse 18**
**CH-9500 Wil(CH)**

(54) **Stecker für einen Lichtwellenleiter und Positionierverfahren unter Verwendung des Steckers.**

(57) Der Stecker (1) erhält bereits bei der Herstellung an seinem Positionierabschnitt (4) mehrere Positioniernasen (9a bis 9f). Der Steckerstift (2) ist dabei bereits drehfest mit dem Positionierabschnitt (4) verbunden. Diejenige Positioniernase (9a), deren Relativlage zum Lichtwellenleiter (3) an der Stirnseite (7) die geringsten Dämpfungswerte gewährleistet, wird durch einen Messvorgang ermittelt und bezeichnet. Alle übrigen Positioniernasen (9b bis 9f) werden anschliessend z.B. durch Abschneiden entfernt.

Fig.1

Fig.4

EP 0 429 398 A2

# STECKER FÜR EINEN LICHTWELLENLEITER UND POSITIONIERVERFAHREN UNTER VERWENDUNG DES STECKERS

Die Erfindung betrifft einen Stecker für einen Lichtwellenleiter gemäss dem Oberbegriff von Anspruch 1, sowie ein Verfahren zum Positionieren des Lichtwellenleiters unter Verwendung dieses Steckers.

Stecker für Lichtwellenleiter sollten wenn möglich immer in der gleichen Winkelposition in das Steckergegenstück eingesteckt werden, da eine absolute Zentrizität des Lichtwellenleiters im Steckerstift in der Praxis nicht möglich ist. Auch mit hochpräzisen Zentrierverfahren zum Fassen des Lichtwellenleiters im Steckerstift ist eine geringfügige Exzentrizität innerhalb eines bestimmten Toleranzspielraums unvermeidlich. Ersichtlicherweise verändert sich bei einem exzentrisch angeordneten Lichtwellenleiter die Dämpfung des übertragenen Lichtes in der Steckverbindung in Abhängigkeit von der relativen Winkelposition der beiden Steckerstift zueinander. Aus diesem Grund soll diese Winkelposition stets gleich bleiben und zwar möglichst so, dass dabei die geringstmögliche Uebertragungsdämpfung erreicht wird.

Die Positionierung des Steckerstifts erfolgt bei bekannten Steckern mit Hilfe eines Bolzens oder einer Nase am Aussenumfang des Steckers. Dieses Positionierelement greift in einen Schlitz an der Hülse des Steckergegenstücks. Die Steckverbindung kann somit nur hergestellt werden, wenn das Positionierelement in den Schlitz eingreift. In der Praxis treten jedoch erhebliche Schwierigkeiten auf, um das Positionierelement relativ zum Lichtwellenleiter im Steckerstift in die optimale Lage zu bringen. Voraussetzung war dabei stets, dass der Steckerstift relativ zum Positionierelement noch verdreht werden kann, bevor er in seiner endgültigen Lage fixiert wird. Bei Steckern, bei denen der Steckerstift und der Positionierabschnitt aus fabrikationstechnischen Gründen schon bei der Herstellung fest miteinander verbunden sind, wie z.B. bei Kunststoffsteckern, besteht keine Möglichkeit der nachträglichen Positionierung des Steckerstifts, bzw. des darin gefassten Lichtwellenleiters relativ zum Positionierabschnitt.

Es ist daher eine Aufgabe der Erfindung, einen Stecker der eingangs genannten Art zu schaffen, bei dem die definitive Orientierung des Lichtwellenleiters in der Steckverbindung auch bei bereits fest mit dem Positionierabschnitt verbundenem Steckerstift nachträglich noch festgelegt werden kann. Das Verfahren zum Festlegen dieser relativen Winkelposition in der Steckverbindung soll ausserdem ohne grossen Aufwand durchführbar sein, wobei jeweils die optimalsten Dämpfungswerte erzielt werden sollen. Ausserdem sollen Fehlpositionierungen möglichst ausgeschlossen werden. Diese Aufgabe wird erfindungsgemäss mit einem Stecker mit den Merkmalen von Anspruch 1 und mit einem Verfahren mit den Merkmalen von Anspruch 5 gelöst.

Da der Positionierabschnitt mehrere, über seinen Aussenumfang verteilte Positioniernasen aufweist, sind bereits so viele mögliche Endpositionen in der Steckverbindung festgelegt, wie Positioniernasen vorhanden sind. Es braucht lediglich noch diejenige Nase ausgewählt zu werden, bei welcher die geringsten Dämpfungswerte erzielt werden. Anschliessend können die restlichen Nasen entfernt werden.

Die Vorteile eines derartigen Steckers kommen ganz besonders zur Geltung, wenn Wenigstens der Positionierabschnitt und die Positioniernasen aus Kunststoffmaterial gefertigt sind, und wenn die Positioniernasen einstückig mit dem Positionierabschnitt ausgebildet sind. Während früher optische Stecker fast ausschliesslich aus Metall und/oder Keramik gefertigt waren, kommen heute vermehrt auch Kunststoffmaterialien zur Anwendung. Dabei wird entweder der Steckerstift einstückig mit dem restlichen Steckerkörper ausgebildet oder es wird z.B. ein Steckerkörper mit einem Positionierabschnitt an einen Steckerstift aus Metall angegossen. Ist der Lichtwellenleiter erst einmal in den Steckerstift eingeführt und fixiert, kann seine relative Lage zum Positionierabschnitt ersichtlicherweise nicht mehr verändert werden. Es besteht somit lediglich noch die Möglichkeit, die Relativlage des ganzen Steckers in der Steckerverbindung festzulegen, was durch die Mehrzahl der Positioniernasen besonders einfach gewährleistet ist. Da die Positioniernasen aus Kunststoffmaterial gefertigt sind, können sie besonders einfach abgeschnitten oder anderweitig abgetragen werden. Herstellungstechnisch bestehen keine Probleme, da die Nasen unmittelbar mit dem Positionierabschnitt gegossen werden.

Besonders zweckmässig ist es, wenn die Positioniernasen in regelmässiger Winkelteilung am Positionierabschnitt angeordnet sind. Auf diese Weise entsteht ein Grundraster zum Ermitteln der optimalsten Position. Bei Steckern nach den gängigen Normen, deren Steckerstifte einen Aussendurchmesser von ca. 2,5 mm bis 3,5 mm aufweisen, hat sich die Anordnung von sechs Positioniernasen als besonders vorteilhaft erwiesen. Diese sechs Nasen ergeben eine genügend feine Abstufung zum Ermitteln der optimalsten Position. Wird ein feinerer Raster gewünscht, so können auch mehr als sechs Nasen angeordnet werden. Bei Steckverbindungen, wo grössere Dämpfungstoleranzen erlaubt sind, könnten aber z.B. auch nur vier Nasen angeordnet sein.

Das erfindungsgemässe Verfahren ist einfach und effizient. Nach dem Fixieren des Lichtwellenleiters im Steckerstift muss dessen Exzentrizität ermittelt werden. Für den theoretischen Fall, dass der Lichtwellenleiter exakt im Zentrum des Steckerstifts fixiert ist, könnte eine beliebige Positioniernase ausgewählt werden, während alle übrigen Positioniernasen entfernt werden. Der Lichtwellenleiter würde bei jeder beliebigen Position in der Steckverbindung stets im Zentrum angeordnet sein. Beim Feststellen einer Exzentrizität soll jedoch stets diejenige Nase ausgewählt werden, welche auf einer durch das Zentrum des Steckerstifts und durch das Zentrum des Lichtwellenleiters führenden Geraden liegt, oder welche wenigstens dieser Geraden am nächsten liegt. In der Steckverbindung sind nämlich die Steckerstifte axial exakt aufeinander ausgerichtet. Wird die vorgenannte Regel stets eingehalten, so ist gewährleistet, dass die Lichtwellenleiter in der Steckverbindung immer auf der gleichen, durch das Zentrum der Steckerachse führenden Ebene liegen. Wenn bei mehreren Steckern stets diejenige Positioniernase ausgewählt wird, welche auf der Geraden entweder immer näher oder immer ferner am Lichtwellenleiter liegt, so wird auf optimalste Weise auch noch erreicht, dass die Stirnendflächen der Lichtwellenleiter in der Steckverbindung auch beim Vorliegen einer Exzentrizität stets aufeinander liegen, wobei Abweichungen höchstens noch durch das Mass der Exzentrizität entstehen können. Allerdings könnte in bestimmten Anwendungsfällen auch eine andere als die soeben beschriebene Relativlage des Lichtwellenleiters zu einer bestimmten Positioniernase ausgewählt werden. So z.B., wenn an der Steckverbindung bewusst eine erhöhte Dämpfung erzielt werden soll.

Die Exzentrizität bzw. die Relativlage kann auf verschiedene Weise ermittelt werden. So kann der Steckerstift in eine Messanordnung eingeführt werden, die eine Steckverbindung simuliert und die eine Hülse zur Aufnahme des Steckerstifts aufweist. In der Hülse ist ein gleichartiger Steckerstift bereits fest positioniert. Der zu positionierende Steckerstift wird nun in die verschiedenen möglichen Rastpositionen gedreht, wobei Licht in den Lichtwellenleiter eingespeist wird. Dieses Licht wird am fest positionierten Steckerstift gemessen, wobei diejenige Positioniernase bezeichnet werden kann, in deren Position die geringsten Dämpfungswerte gemessen werden.

Die Positioniernase mit der optimalen Relativlage zum Lichtwellenleiter kann aber auch durch unmittelbare Betrachtung der Stirnseite des Steckerstifts im Auflicht ermittelt werden. Dies kann z.B.

unter einem Mikroskop erfolgen oder auch mit Hilfe einer Kamera, welche die Stirnseite des Steckerstifts auf einem Bildschirm vergrössert darstellt. Mit Hilfe von Mess-Skalen oder dergleichen lässt sich die Relativlage des Lichtwellenleiters feststellen, wonach die richtige Positioniernase bezeichnet werden kann.

Die überzähligen Positioniernasen können besonders einfach mit einem Schneidwerkzeug entfernt werden. Die Positioniernasen können dabei einzeln mit einem Messer abgeschnitten werden, oder es wäre auch ein Werkzeug denkbar, das ringförmig ausgebildet ist und mit dem alle überzähligen Positioniernasen gleichzeitig abgeschnitten werden können. Die Positioniernasen könnten aber auch abgeschliffen, abgeschmolzen oder mit einer Zange abgeklemmt werden.

Ein Ausführungsbeispiel der Erfindung ist in den Zeichnungen dargestellt und wird nachstehend genauer beschrieben. Es zeigen:

Figur 1 einen Querschnitt durch einen erfindungsgemässen Stecker mit eingeführtem Lichtwellenleiter in stark vergrössertem Massstab,

Figur 2 eine Draufsicht auf den Stecker gemäss Figur 1,

Figur 3 eine Ansicht der Stirnseite des Steckers gemäss Figur 1,

Figur 4 eine Ansicht der Stirnseite in nochmals stark vergrösserter Darstellung, und

Figur 5 die schematische Darstellung einer Messanordnung zum Ermitteln der optimalen Positioniernase.

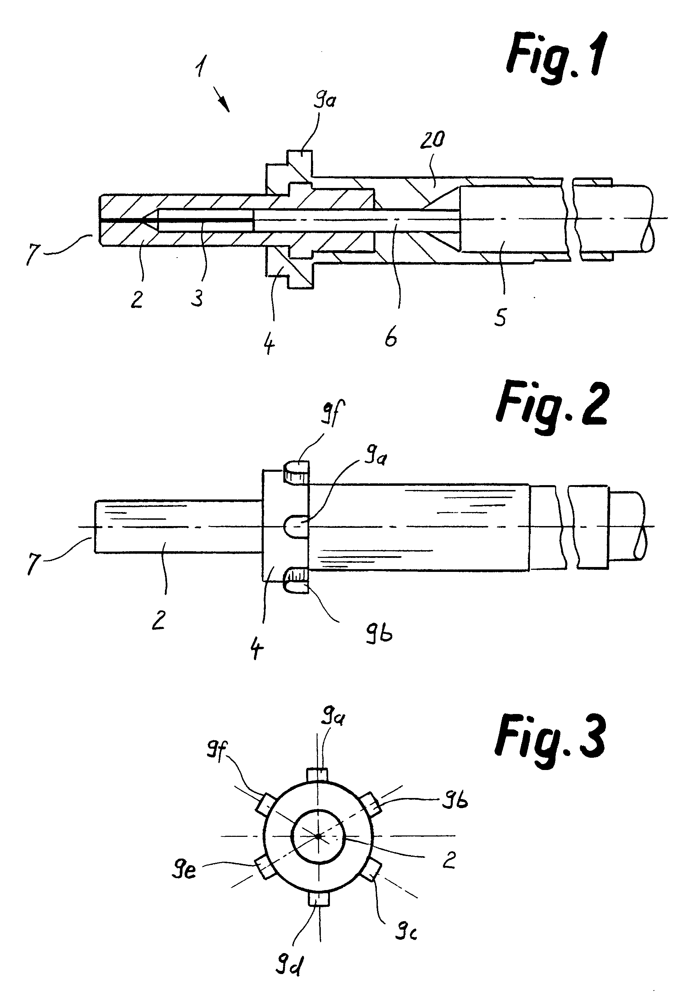

Wie in den Figuren 1 bis 3 dargestellt, besteht ein Stecker 1 im wesentlichen aus einem Steckerstift 2 und aus einem Steckerkörper 20, an dessen Vorderseite ein Positionierabschnitt 4 angeordnet ist. Der Steckerstift 2 ist in den Steckerkörper eingebettet und drehfest mit diesem, bzw. mit dem Positionierabschnitt 4 verbunden. Es könnte sich dabei beispielsweise um einen Kunststoffstecker handeln, wobei der Steckerstift 2 und der Steckerkörper 20 aus unterschiedlichen Kunststoffmaterialien in zwei verschiedenen Arbeitsgängen gegossen werden. Der Steckerstift 2 könnte aber auch aus einem Metall, insbesondere aus Hartmetall oder aus einem keramischen Werkstoff gefertigt sein, wobei der Steckerkörper 20 aus Kunststoffmaterial an den Steckerstift 2 angegossen wird.

Der Stecker 1 hat auf an sich bekannte Weise eine zentrale Bohrung mit verschiedenen Durchmesserabstufungen, in welcher der Lichtwellenleiter 3 gefasst ist. Dieser ist von einem Innenmantel 6 und von einem Aussenmantel 5 umgeben. Der Lichtwellenleiter und die beiden Umhüllungen werden in ihren jeweiligen Bohrungen verklebt. An der Stirnseite 7 liegt die Endfläche des Lichtwellenleiters, welche vorzugsweise geschliffen wird.

Am Positionierabschnitt 4 mit einem etwas grösseren Aussendurchmesser als der übrige Steckerkörper 20 sind insgesamt sechs Positioniernasen 9a bis 9f in regelmässiger Winkelteilung angeordnet. Die Nasen haben parallele Seitenwände und sind vorne abgerundet, damit sie besser in den Zentrierschlitz am Steckergegenstück eingeführt werden können. Die Positioniernasen könnten aber ohne weiters auch eine andere Konfiguration aufweisen. Sie könnten z.B. als zylindrische Bolzen oder auch als halbkugelförmige Buckel oder dergleichen ausgebildet sein, je nachdem, welche Form das Positionierelement am Steckergegenstück aufweist. Nicht dargestellt sind in den Zeichnungen die Steckeraussenteile, wie z.B. Ueberwurfmuttern, Aussenhüllen, usw.

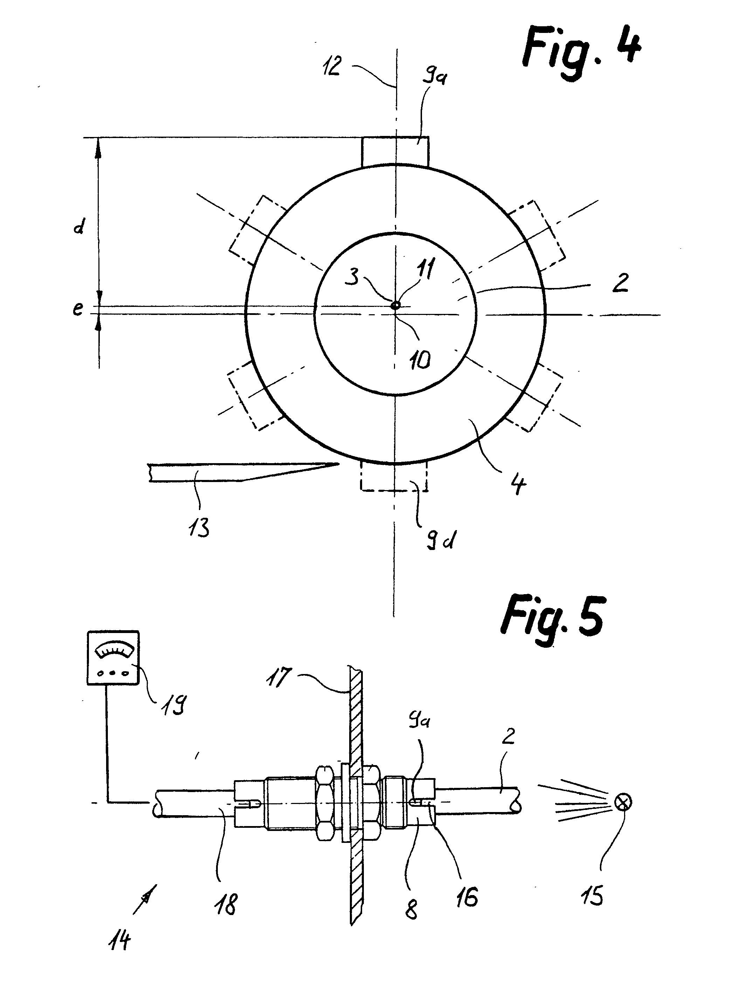

In Figur 4 ist die Stirnseite 7 stark vergrössert dargestellt. Es wird dabei angenommen, dass das Zentrum 11 des Lichtwellenleiters zum Zentrum 10 des Steckerstifts 2 eine Exzentrizität e aufweist. Um zu erreichen, dass bei mehreren Steckern, deren Lichtwellenleiter stets eine Exzentrizität von e aufweisen, die Lichtwellenleiter in der Steckverbindung stets die gleiche Lage einnehmen, muss diejenige Positioniernase 9a ausgewählt werden, die auf einer Geraden 12 liegt, welche durch die beiden Zentren 10 und 11 führt. Theoretisch würde im vorliegenden Ausführungsbeispiel auch die Positioniernase 9d diese Regel erfüllen. Um sicherzustellen, dass bei zwei einander gegenüberliegenden Stirnseiten in einer Steckverbindung keine Abweichung von 180° auftreten kann, muss daher zusätzlich noch stets diejenige Positioniernase 9a ausgewählt werden, welche z.B. mit der Distanz d näher am Zentrum 11 des Lichtwellenleiters liegt. Es wäre aber auch durchaus denkbar, dass stets diejenige Nase 9d ausgewählt wird, welche ferner am Lichtwellenleiter 3 liegt. Durch Konvention hat es sich in der Praxis jedoch durchgesetzt, dass auf der Geraden 12 stets die näherliegende Nase 9a ausgewählt wird.

Ist die optimale Positioniernase 9a einmal ausgewählt, so können die übrigen Nasen 9b bis 9f z.B. mit einem Schneidwerkzeug 13 entfernt werden. Bei einer Mehrzahl derart bearbeiteter Stecker liegt der Lichtwellenleiter 3 ersichtlicherweise stets etwa in der gleichen Relativlage zur ausgewählten Positioniernase, so dass in der Steckverbindung eine optimale Ausrichtung mit einem geringen Dämpfungswert erzielt wird.

In Figur 5 ist beispielsweise eine Messanordnung 14 schematisch dargestellt, bei welcher ein Steckergegenstück 8 in der Form eines Mittelteils dargestellt ist. Dieses Steckergegenstück könnte z.B. an einer Gehäusewand 17 verschraubt sein. Es weist an beiden Enden je eine Hülse mit einem Schlitz 16 auf. Auf der einen Seite ist ein Stecker 18 fest positioniert. Mit diesem Stecker ist ein Messgerät 19 verbunden, mit dem das am Stecker 18 empfangene Licht gemessen werden kann.

In den Steckerstift 2, dessen optimale Positioniernase bestimmt werden muss, wird über eine Lichtquelle 15 Licht eingespeist. Der Steckerstift wird nun im Steckergegenstück 8 in so viele Positionen gedreht, wie Positioniernasen vorhanden sind, also insgesamt in sechs Positionen. In jeder Position wird am Messgerät 19 das empfangene Licht, bzw. die Uebertragungsdämpfung gemessen. Bei derjenigen Positioniernase 9a, bei der die in Figur 4 dargestellten Bedingungen erfüllt sind, wird ersichtlicherweise die geringste Uebertragungsdämpfung gemessen. Diese Positioniernase kann z.B. mit einer Farbmarkierung versehen werden, so dass nachträglich die restlichen Positioniernasen abgeschnitten werden können.

Das alternative Messverfahren, bei dem die Position des Lichtwellenleiters durch Ausmessen ermittelt wird, ist hier nicht näher beschrieben. Betrachtungsgeräte und Manipulatoren zum Ausmessen der Stirnseite eines Steckerstifts sind dem Fachmann bereits bekannt.

## Ansprüche

1. Stecker (1) für einen Lichtwellenleiter (3) mit einem Steckerstift (2), in dem der Lichtwellenleiter fixiert ist und mit einem Positionierabschnitt (4), welcher der Positionierung des Steckerstiftes in einem Steckergegenstück (8) dient, und welcher drehfest mit dem Steckerstift (2) verbunden ist, dadurch gekennzeichnet, dass der Positionierabschnitt (4) mehrere, über seinen Aussenumfang verteilte Positioniernasen (9a bis 9f) aufweist, welche wahlweise vom Positionierabschnitt (4) entfernbar sind.

2. Stecker nach Anspruch 1, dadurch gekennzeichnet, dass wenigstens der Positionierabschnitt (4) und die Positioniernasen aus Kunststoffmaterial gefertigt sind, und dass die Positioniernasen einstückig mit dem Positionierabschnitt ausgebildet sind.

3. Stecker nach Anspruch 1 oder 2, dadurch gekennzeichnet, dass die Positioniernasen (9a bis 9f) in regelmässiger Winkelteilung am Positionierabschnitt (4) angeordnet sind.

4. Stecker nach einem der Ansprüche 1 bis 3, dadurch gekennzeichnet, dass der Positionierabschnitt (4) sechs Positioniernasen aufweist.

5. Verfahren zum Positionieren eines Lichtwellenleiters (3) in einem Steckerstift (2) relativ zu einer Positioniernase (9a), welche der Positionierung des Steckerstifts in einem Steckergegenstück (8) dient, unter Verwendung eines Steckers nach Anspruch 1, wobei die relative Lage des Lichtwellenleiters (3) zum Zentrum (10) des Steckerstifts (2) und/oder eine vorbestimmte geometrische Beziehung zwischen der Lage des Lichtwellenleiters und einer der Positioniernasen festgestellt wird, und wobei alle Positioniernasen (9b bis 9f) entfernt werden, mit Ausnahme einer Nase (9a), welche die genannte geometrische Beziehung erfüllt.

6. Verfahren nach Anspruch 5, dadurch gekennzeichnet, dass diejenige Positioniernase (9a) ausgewählt wird, welche auf einer durch das Zentrum (10) des Steckerstiftes und durch das Zentrum (11) des Lichtwellenleiters führenden Geraden (12) liegt, oder welche dieser Geraden am nächsten liegt.

7. Verfahren nach einem der Ansprüche 5 oder 6, dadurch gekennzeichnet,
- dass der Steckerstift (2) zur Auswahl der Positioniernase in eine Messanordnung (14) eingeführt wird, die eine Hülse zur Aufnahme des Steckerstifts aufweist, in welcher ein gleichartiger Steckerstift (18) fest positioniert ist,
- dass in den zu positionierenden Lichtwellenleiter Licht (15) eingespeist wird, welches am Lichtwellenleiter des fest positionierten Steckerstifts (18) gemessen wird,
- dass der Steckerstift (2) in so viele Einzelpositionen gedreht wird, wie Positioniernasen vorhanden sind, und
- dass diejenige Positioniernase (9a) bezeichnet wird, in deren Messposition der geringste Dämpfungswert des austretenden Lichtes gemessen wird.

8. Verfahren nach einem der Ansprüche 5 oder 6, dadurch gekennzeichnet, dass der Steckerstift (2) zur Auswahl der Positioniernase in eine Beobachtungsanordnung eingeführt wird, in welcher die Stirnseite (7) des Steckerstifts im Auflicht betrachtet wird, und dass ggf. unter Zuhilfenahme eines Fadenkreuzes und/oder einer Skala diejenige Positioniernase ausgewählt und bezeichnet wird, welche die Bedingungen gemäss Anspruch 5 erfüllt.

9. Verfahren nach einem der Ansprüche 5 bis 8, dadurch gekennnzeichnet, dass die überzähligen Positioniernasen mit einem Schneidwerkzeug (13) entfernt werden.

# Fig.1

# Fig.2

# Fig.3

# Fig. 4

12   9a

d

e   3   11   2

10

13   4

9 d

# Fig. 5

19   17   9a   2

18   14   8   16   15